# EUROPÄISCHE PATENTSCHRIFT

(11) **EP 3 391 509 B1**
(45) Veröffentlichungstag und Bekanntmachung des Hinweises auf die Patenterteilung: **21.10.2020**
(21) Anmeldenummer: 18710431.0
(22) Anmeldetag: 08.03.2018
(51) Int. Cl.: H02K 1/14, H02K 5/08, H02K 15/12, H02K 5/128

(54) **ELEKTROMOTOR**
ELECTRIC MOTOR
MOTEUR ÉLECTRIQUE

(30) Priorität: 10.03.2017 DE 102017105089
(43) Veröffentlichungstag der Anmeldung: 24.10.2018
(73) Patentinhaber: Kolektor Group d.o.o., 5280 Idrija (SI)
(72) Erfinder: LAHAJNAR, Franci, 5282 Cerkno (SI); JEZERSEK, Boris, 5275 Godovic (SI); JERAM, Borut, 5282 Cerkno (SI)
(74) Vertreter: Grättinger Möhring von Poschinger Patentanwälte Partnerschaft mbB
(86) Internationale Anmeldenummer: PCT/EP2018/055710
(87) Internationale Veröffentlichungsnummer: WO 2018/162620

(56) Entgegenhaltungen:
- EP-A2- 1 422 809
- EP-B1- 1 281 229
- WO-A1-2016/203592
- GB-A- 1 485 059
- JP-A- 2013 215 023

## Beschreibung

Die vorliegende Erfindung betrifft einen Elektromotor. Insbesondere betrifft die vorliegende Erfindung einen Elektromotor in Innenrotorbauweise, d. h. einen einen Außenstator und einen um eine Achse drehbar gelagerten Innenrotor aufweisenden Elektromotor. Speziell betrifft die vorliegende Erfindung einen solchen Elektromotor, insbesondere für ein Fluidaggregat, bei dem der Außenstator eine Mehrzahl von um die Achse herum angeordneten ferromagnetischen Polstücken mit sich im Wesentlichen radial erstreckenden Wicklungskernen, eine spritzgeformte Kunststoffstruktur mit die Wicklungskerne umhüllenden Wicklungsträgern und einer Hülse, welche eine sich radial innerhalb der Polstücke erstreckende, geschlossene Innenfläche aufweist, und auf den Wicklungsträgern aufgenommene Statorwicklungen umfasst, wobei der Rotor innerhalb der Hülse angeordnet ist.

Elektromotoren sind in einer geradezu unüberschaubaren Vielzahl unterschiedlicher Bauweisen und Konzeptionen bekannt. Es gibt sie als Innenrotor-, als Außenrotor- und als Scheibenmotoren, als Wechselstrom- und als Gleichstrommotoren, letztere mit mechanischer oder elektronischer Kommutierung, etc., etc. Die Auswahl des für eine bestimmte Anwendung am besten geeigneten Elektromotors erfolgt dabei typischerweise anhand diverser verschiedener Gesichtspunkte und Kriterien. Zu berücksichtigen sind beispielsweise die vorhandene Spannungsversorgung, die benötigte Motor-Betriebscharakteristik (Motorkennlinie), das vorhandene Raumangebot, die Kostensituation, eine ggf. geforderte EMV-Verträglichkeit, die vorhandene Kühlsituation, etc. Die DE 10052797 A1 offenbart eine Radialpumpe mit einem Pumpenkopf, dessen Laufrad durch einen Elektromotor der eingangs angegeben Art angetrieben ist. Der Elektromotor ist dabei in einem topfförmigen Motorgehäuse untergebracht; sein Stator ist an dem Boden des Motorgehäuses angebracht. Gegenüber seinem Boden ist das Motorgehäuse durch ein einen Ansaugstutzen aufweisendes Pumpengehäuse verschlossenen, welches gemeinsam mit einem darin aufgenommenen Einsatz den Raum für das Laufrad definiert. Der Motorrotor ist über seine Welle einerseits an dem Boden des Motorgehäuses und andererseits in dem Einsatz des Pumpenkopfes gelagert. Durch einen sich über seinen Boden hinausgehend erstreckenden ringförmigen Fortsatz bildet das Motorgehäuse einen durch einen Deckel verschlossenen Aufnahmeraum für die Motorsteuerung und sonstigen elektronischen Komponenten aus.

EP 1 281 229 B1 offenbart: Elektromotor , insbesondere für ein Fluidaggregat, mit einem Außenstator und einem um eine Achse drehbar gelagerten Innenrotor, mit den folgenden Merkmalen:
- der Außenstator umfasst eine Mehrzahl von um die Achse herum angeordneten ferromagnetischen Polstücken mit sich im Wesentlichen radial erstreckenden Wicklungskernen,
- eine spritzgeformte Kunststoffstruktur einer Hülse, welche eine sich radial innerhalb der Polstücke erstreckende, geschlossene Innenfläche aufweist, und
- auf den Wicklungsträgern aufgenommene Statorwicklungen
- der Rotor ist innerhalb der Hülse angeordnet; 11
- die Kunststoffstruktur umfasst eine Büchse, welche ihrerseits die Hülse sowie ein diese endseitig verschließendes Abschlussstück umfasst, wobei der Rotor in einem in dem Abschlussstück angeordneten Lager gelagert ist.

Die vorliegende Erfindung hat sich zum Ziel gesetzt, einen Elektromotor bereitzustellen, der sich in noch besserer Weise für den Antrieb eines Fluidaggregats (beispielweise eines Ölabscheiders in einem KFZ) eignet und - bei der Möglichkeit einer kostengünstigen Herstellung - den dabei in diverser Hinsicht bestehenden Anforderungen in hervorragender Weise gerecht wird. Gelöst wird diese Aufgabenstellung durch den in Anspruch 1 angegebenen Elektromotor, d.h. durch einen Elektromotor in Innenrotorbauweise, der sich durch die folgenden in Kombination zusammenwirkenden Merkmale auszeichnet: Der Außenstator umfasst eine Mehrzahl von um die Achse herum angeordneten ferromagnetischen Polstücken mit sich im Wesentlichen radial erstreckenden Wicklungskernen, eine spritzgeformte Kunststoffstruktur mit einer Büchse und daran angeformten, die Wicklungskerne umhüllenden Wicklungsträgern, und auf den Wicklungsträgern aufgenommenen Statorwicklungen. Die Büchse umfasst eine Hülse mit einer sich radial innerhalb der Polstücke erstreckenden, geschlossenen Innenfläche und ein die Hülse endseitig verschließendes Abschlussstück. Der Rotor ist innerhalb der Hülse angeordnet und in einem in dem Abschlussstück angeordneten Lager gelagert. Der Stator weist einen aus Kunststoff in situ spritzgeformten, an die Kunststoffstruktur angespritzten Außenkorpus auf, in den die Kunststoffstruktur samt Wicklungen eingebettet ist.

Ein zentrales Merkmal des erfindungsgemäßen Elektromotors besteht demgemäß in einer komplexen, an die Polstücke spritzgeformten, mehrere Funktionalitäten in sich vereinigenden Kunststoffstruktur. Diese umfasst zumindest eine Büchse und daran angeformte, die Wicklungskerne (der Polstücke) umhüllende Wicklungsträger, wobei die Büchse ihrerseits eine Hülse mit einer sich radial innerhalb der Polstücke erstreckenden geschlossenen, typischerweise zylindrischen Innenfläche und ein die Hülse endseitig verschließendes Abschlussstück umfasst. Aufgrund der geschlossenen Innenfläche der Hülse sowie des diese endseitig verschließenden Abschlussstücks eignet sich die Büchse der Kunststoffstruktur dabei für eine dauerhaft absolut zuverlässige dichte Abgrenzung zweier Bereiche des Außenstators, nämlich jenes (inneren) Bereichs, in welchem der Innenrotor angeordnet ist, und jenes (äußeren) Bereichs, in welchem sich, auf die Wicklungsträger gewickelt, die statorseitigen Wicklungen befinden. Eine solche hermetische Kapselung des Rotorraumes ermöglicht wiederum insbesondere die Integration des Elektromotors in die jeweilige Anwendung sowie eine entsprechende Betriebsweise des Elektromotors dergestalt, dass der Rotor von einem Fluid umspült ist, bei dem es sich namentlich um jenes Fluid handelt, auf das ein durch den Elektromotor betriebenes Aggregat (beispielsweise ein Ölabscheider eines Kfz) einwirkt. Damit entfällt das Erfordernis einer hermetischen Abdichtung jenes Aggregats gegenüber dem Rotor des Elektromotors. Es besteht die Möglichkeit einer effektiven Kühlung des Elektromotors durch das innerhalb der Büchse (in dem Rotorraum) zirkulierende Fluid. Zudem kann bei geeignetem Fluid dieses zur Schmierung der Rotorlagerung beitragen, die gemäß der vorliegenden Erfindung mittels eines in dem Abschlussstück der Büchse angeordneten Lagers erfolgt. Auf der anderen Seite kommt der äußere Bereich des Stators, in welchem sich insbesondere die Statorwicklungen befinden, nicht mit jenem Fluid in Berührung. Die Lagerung des Rotors an dem Abschlussstück der Büchse der Kunststoffstruktur erlaubt zudem eine besonders kostengünstige Herstellung des Elektromotors. Die komplexe Kunststoffstruktur kann überdies, wie sich aus den folgenden Erläuterungen ergibt, noch verschiedene weitere Funktionalitäten übernehmen.

Der an die bis dahin gefertigte Einheit aus Polstruktur, daran spritzgeformter Kunststoffstruktur, auf diese aufgebrachten Statorwicklungen - sowie gegebenenfalls aufgesetztem Neutral-Ring und/oder gegebenenfalls angeschlossener Leiterplatte - angespritzte Außenkorpus steift den Stator weiter aus. Zugleich bildet er einen mechanischen und chemischen Schutz der verschiedenen Komponenten des Stators, beispielsweise gegen Korrosion. Durch die aussteifende Funktion des Außenkorpus kann die spritzgeformte (innere) Kunststoffstruktur entsprechend schwächer ausfallen, d. h. sich weitgehend auf die Materialstärke beschränken, die für die Erfüllung der während der Herstellung des Stators wesentlichen Eigenschaften erforderlich ist. Die Aussteifung von Außenkorpus und Kunststoffstruktur untereinander wird dabei besonders begünstigt, wenn beide Teile aus einem übereinstimmenden Material (insbesondere Epoxy-Thermoset) bestehen, so dass Außenkorpus und Kunststoffstruktur sich idealerweise miteinander zu einer Einheit verbinden.

Im Hinblick auf die ihr zukommenden Funktionalitäten besteht die Kunststoffstruktur bevorzugt aus einem Thermoset-Material, besonders bevorzugt aus Epoxy-Thermoset. Namentlich die für die Lagerung des Rotors erforderliche Belastbarkeit der Kunststoffstruktur lässt sich dabei bereits mit vergleichsweise geringen Wandstärken erreichen, was der Realisierung vergleichsweise kompakter und leichter Elektromotoren nach dem erfindungsgemäßen Konzept entgegenkommt.

Gemäß einer anderen bevorzugten Weiterbildung der vorliegenden Erfindung sind an dem Abschlussstück mindestens zwei Stützvorsprünge angeordnet, an denen eine Leiterplatte mit einer elektronischen Motorsteuerung fixiert ist. Die Leiterplatte erstreckt sich dabei bevorzugt quer zur Achse des Motors nahe der Stirnseite des Abschlussstücks. Dies ist besonders günstig im Hinblick auf die Herstellung einer zuverlässigen Kontaktierung der statorseitigen Wicklungen mit der Leiterplatte mit geringem Aufwand. In diesem Zusammenhang zeichnet sich eine ganz besonders bevorzugte Weiterbildung der Erfindung dadurch aus, dass an dem Abschlussstück Aufnahmen für elektrische Kontaktstücke angeformt sind. Jene Aufnahmen - und demgemäß die in sie eingesetzten Kontaktstücke - können dabei namentlich jeweils zu einem Zwischenraum zwischen zwei Polstücken fluchten. Und die Kontaktstücke sind bevorzugt U-förmig gestaltet, so dass der Wicklungsdraht zwischen zwei auf einander benachbarten Wicklungsträgern aufzubringenden Statorwicklungen durch das U-förmige Kontaktstück hindurch verlegt wird. Besonders günstig ist es dabei, wenn die Kontaktstücke einen in einem Kontaktstift auslaufenden Schenkel aufweisen, wobei die Kontaktstifte mit der Leiterplatte kontaktiert sind.

Eine andere bevorzugte Weiterbildung der Erfindung zeichnet sich dadurch aus, dass die Polstücke radial außen von einem sie kontaktierenden, sich senkrecht zur Achse erstreckenden Neutral-Ring umgeben sind. Bevorzugt ist der - besonders bevorzugt aus einem Stapel von Ringlamellen zusammengefügte - Neutral-Ring dabei mit einem stiftförmigen Neutral-Kontakt verbunden. Zu dessen Führung weist das Abschlussstück der Kunststoffstruktur besonders bevorzugt ein spezifisches Stützelement auf. Durch dieses wird der Neutral-Kontakt so positioniert, dass beim Aufsetzen der Leiterplatte auf die weiter oben erläuterten Stützvorsprünge des Abschlussstücks (zusätzlich zu einer Kontaktierung der Kontaktstücke) auch eine elektrische Verbindung zum Neutral-Kontakt hergestellt werden kann.

Gemäß einer anderen bevorzugten Weiterbildung der Erfindung sind die Polstücke radial außen T-förmig ausgeführt. So ergibt sich ein großflächiger Übergang der Polstücke zu dem Neutral-Ring. Zwischen den T-förmigen Enden ("Köpfen") einander benachbarter Polstücke besteht dabei jeweils ein Spalt, der das Aufbringen der Wicklungen auf die Wicklungsträger in Anwendung der Nadel-Wickeltechnik (von außen) ermöglicht. In diesem Sinne besteht bevorzugt auch zwischen jeweils zwei einander benachbarten Abschlussplatten, in welche die Wicklungsträger der Kunststoffstruktur vorzugsweise radial außen übergehen bzw. die radial außen an die Wicklungsträger angeformt sind, jeweils ein Spalt, welcher das Durchtreten der Wicklungsnadel ermöglicht.

Gemäß einer abermals anderen bevorzugten Weiterbildung der Erfindung ist in die Büchse der Kunststoffstruktur eine Einsatzbüchse, besonders bevorzugt aus Edelstahl eingebettet. Hierdurch lassen sich die statischen Eigenschaften verbessern, wobei zugleich nachteilige Auswirkungen auf die magnetischen Eigenschaften unterbleiben. Auch kann dies bei bestimmten Anwendungen im Hinblick auf eine optimale Abschirmung des Fluids, welches den Rotorraum durchströmt, gegenüber dem Wicklungsbereich des Stators günstig sein.

Im Interesse einer besonders zuverlässigen Abdichtung der einzelnen Bereiche des Stators gegeneinander (s. o.) ist weiterhin besonders vorteilhaft, wenn die Hülse stirnseitig, gegenüber dem Abschlussstück eine Dichtfläche oder eine sonstige Dichtstruktur für einen dichten Anschluss an ein Aggregatgehäuse bzw. sonstiges Bauteil eines durch den Elektromotor angetriebenen Aggregats aufweist. Beispielsweise kann an der Stirnseite der Hülse eine umlaufende Nut zur Aufnahme eines O-Rings vorgesehen sein.

Gemäß einer wiederum anderen bevorzugten Weiterbildung der Erfindung sind die Polstücke Teil einer zusammenhängenden Polstruktur, indem sie radial innen im Bereich von Fortsätzen untereinander jeweils über Verbindungsstege verbunden sind. Die Verbindungsstege weisen dabei minimale Querschnitte auf, die für die Formbeständigkeit der Polstruktur ausreichen aber für magnetischen Fluss einen großen Widerstand bilden; so weisen die Verbindungsstege zwischen den einzelnen Polstücken namentlich nur geringe radiale Erstreckung auf. Im Hinblick auf die maßgeblich vereinfachte Herstellung des erfindungsgemäßen Elektromotors wird der Nachteil einer - durch Streuverluste - geringfügig reduzierten Effizienz in Kauf genommen. Besteht, wie dies in bevorzugter Weiterbildung der Erfindung der Fall ist, die Polstruktur aus einem Lamellenstapel, so ist in besonders bevorzugter Weiterbildung nur ein Teil der Lamellen ringförmig zusammenhängend, indem die einzelnen Polstücklamellen untereinander über Verbindungsstege verbunden sind; in den übrigen Schichten der Polstruktur sind demgegenüber jeweils separate Polstücklamellen vorgesehen, zwischen denen jeweils ein Freiraum besteht. So kann bei einer aus einem Lamellenstapel bestehenden Polstruktur beispielsweise nur jede zweite, jede dritte oder jede vierte Lamelle ringförmig zusammenhängend ausgeführt sein. Hierdurch lassen sich die erwähnten Streuverluste minimieren. Die erfindungsgemäß an die Polstruktur spritzgeformte, die erwähnten Freiräume zwischen den einzelnen Polstücklamellen ausfüllende Kunststoffstruktur gewährleistet dabei die Integrität der Polstruktur, obwohl bei dieser nur ein Teil der Lamellen Verbindungsstege aufweist und auf diese Weise ringförmig zusammenhängend ausgeführt ist. Gemäß einer alternativen Ausgestaltung können im Bereich jener Verbindungsstege die einzelnen ringförmig geschlossenen Polstruktur-Lamellen (durch Einprägungen oder dergleichen) dünner sein als in ihren übrigen Bereichen, so dass zwischen den einzelnen Verbindungsstegen der zu einer Polstruktur zusammengefügten ringförmig geschlossenen Polstruktur-Lamellen jeweils ein axialer Abstand besteht. Ein für die Herstellung der Polstruktur-Lamellen besonders geeignetes Material ist klassischer "electric steel".

In abermals anderer bevorzugter Weiterbildung der vorliegenden Erfindung weist der Rotor eine aus einem Lamellenstapel bestehende Kernstruktur auf. Besonders bevorzugt verfügt die Kernstruktur dabei über mehrere Durchbrüche, in welche (bevorzugt gesinterte) PermanentMagnete eingesetzt sind. Auch die Kernstruktur ist dabei besonders bevorzugt - zumindest teilweise, nämlich stirnseitig - mit einem Kunststoffmantel umgossen. Dessen Material ist auf die jeweilige Anwendung abgestimmt, so dass der Kunststoffmantel insbesondere einen Schutz der Kernstruktur gegen chemische Einflüsse durch das in dem Rotorraum zirkulierende Fluid bewirkt.

Im Folgenden wird die vorliegende Erfindung anhand eines in der Zeichnung veranschaulichten bevorzugten Ausführungsbeispiels näher erläutert. Dabei zeigen
- Figuren 1-8: den Stator eines erfindungsgemäßen Elektromotors anhand der Schritte seiner Herstellung und
- Figuren 9-11: den zum Zusammenwirken mit dem Stator nach den Figuren 1-8 geeigneten Rotor anhand der Schritte seiner Herstellung.

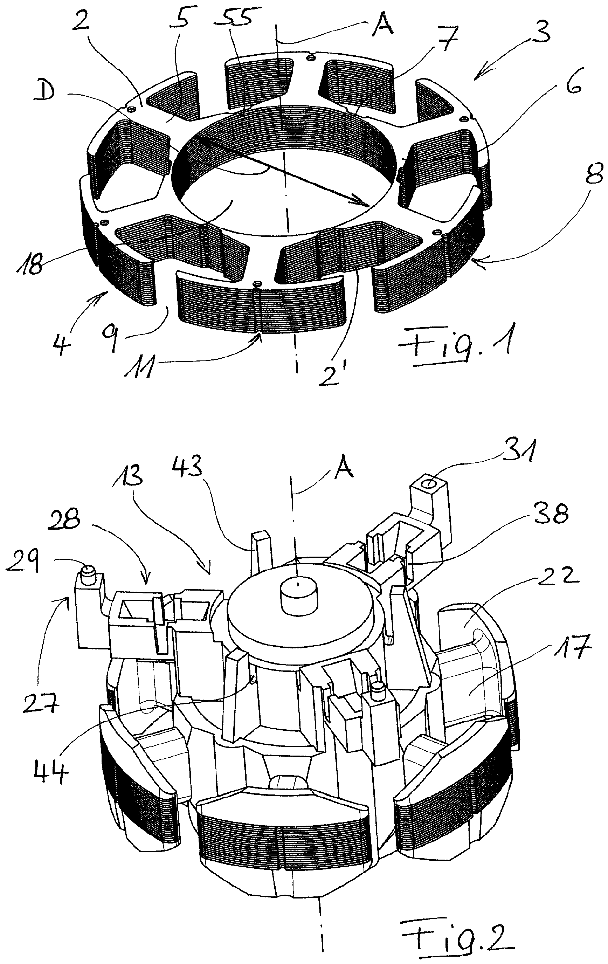

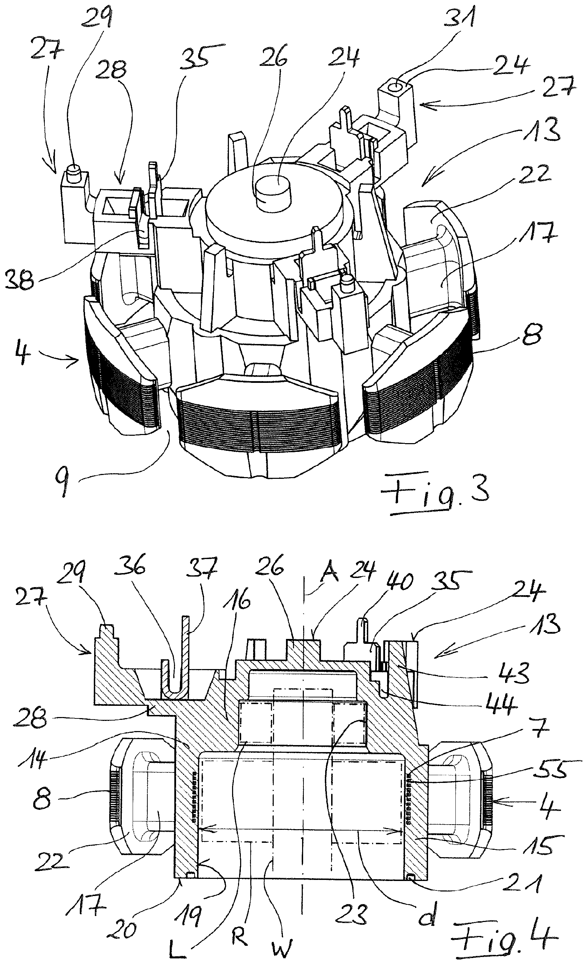

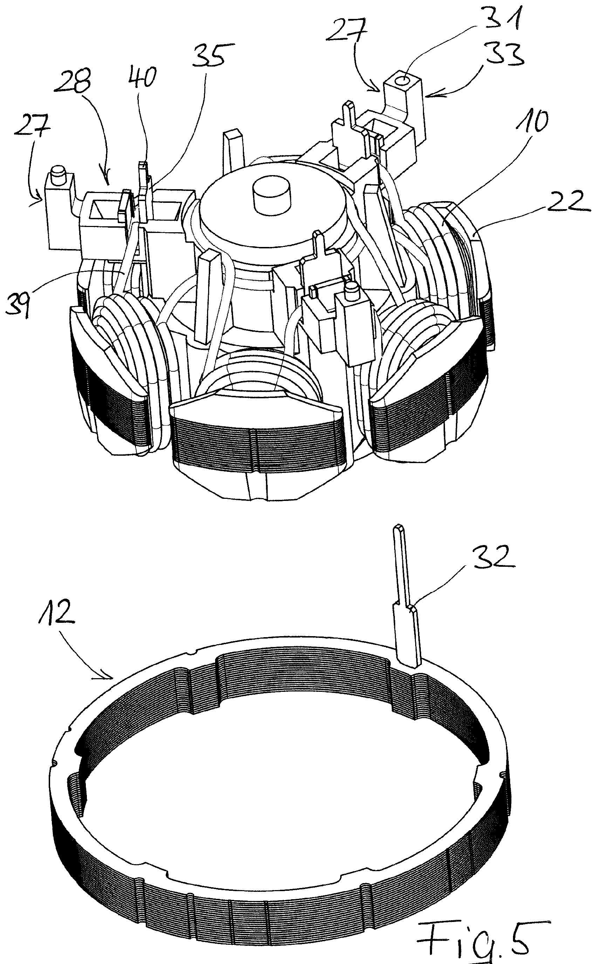

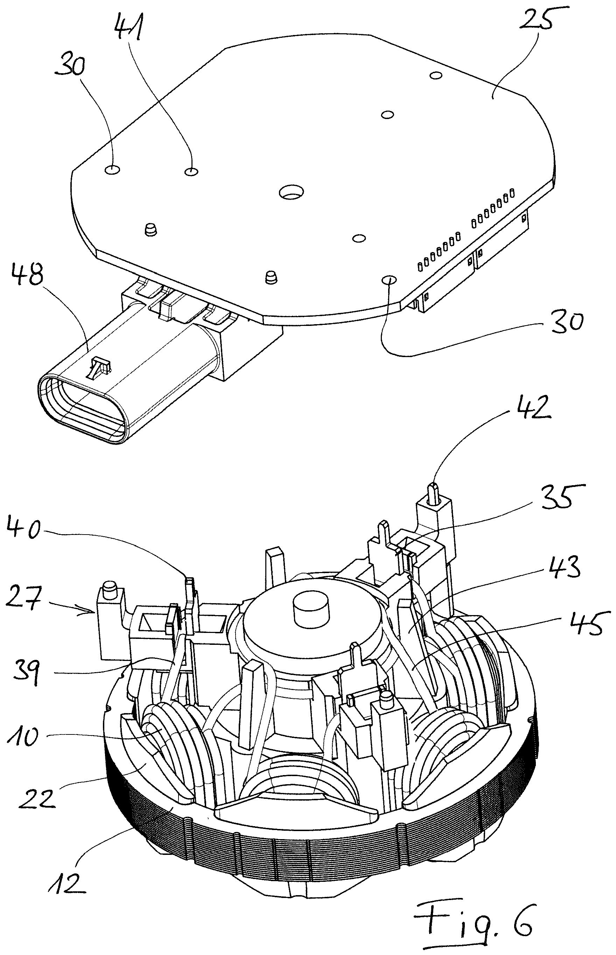

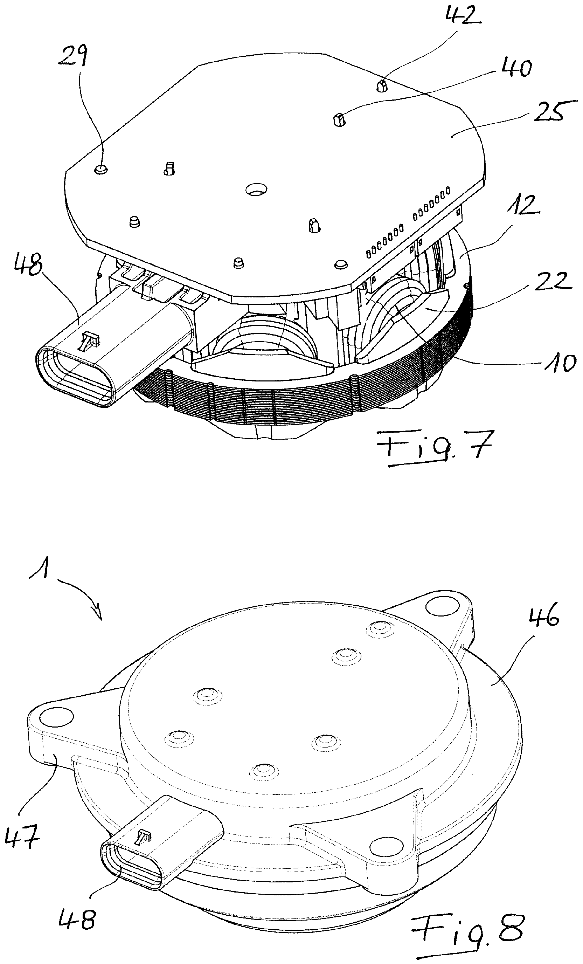

Basis der Herstellung des Außenstators 1 (vgl. Fig. 8) ist die in Fig. 1 gezeigte, aus einem Lamellenstapel bestehende Polstruktur 3. Diese ist zusammengefügt aus elf identischen ringförmig geschlossenen Polstruktur-Lamellen 2 und - jeweils abwechselnd - zwischen diesen in zehn Schichten angeordneten einzelnen Polstück-Lamellen 2'. Die sechspolige Polstruktur 3 weist sechs gleichmäßig um die Achse A herum angeordnete ferromagnetische Polstücke 4 auf. Diese umfassen jeweils einen sich radial erstreckenden Wicklungskern 5. Radial innen weisen die Polstücke 4 jeweils zwei sich in Umfangsrichtung erstreckende Fortsätze 6 auf. In den elf durch die ringförmig geschlossenen Polstruktur-Lamellen 2 gebildeten Schichten sind die einander zugewandten Fortsätze 6 zweier einander benachbarter Polstücke 4 jeweils über Verbindungsstege 7 miteinander verbunden; diese weisen eine nur minimale radiale Erstreckung auf. In den zehn weiteren Schichten bestehen zwischen den einzelnen Polstücklamellen 2' Freiräume 55 (vgl. Fig. 4). Radial außen sind die Polstücke 4 T-förmig ausgeführt. Zwischen den T-förmigen Köpfen 8 einander benachbarter Polstücke 4 besteht jeweils ein Spalt 9 hinreichender Breite, um - in Nadel-Wickeltechnik von außen her - die Statorwicklungen 10 (vgl. Fig. 5) zu erzeugen. Mittig an den T-förmigen Köpfen 8 der Polstücke vorgesehene Entlastungskerben 11 dienen der Möglichkeit einer definierten Deformation der Polstücke 2 beim späteren Aufpressen des Neutral-Ringes 12 (vgl. Figuren 5 und 6).

In einer Spritzgießform wird an die Polstruktur 3 eine komplexe Kunststoffstruktur 13 aus Epoxy-Thermoset durch Spritzformen angeformt (vgl. Fig. 2-4). Die Kunststoffstruktur 13 umfasst dabei eine Büchse 14, welche sich im Wesentlichen aus einer Hülse 15 und einem diese endseitig verschließenden Abschlussstück 16 zusammensetzt, und an der Hülse 15 einstückig angeformten, von dieser radial abstehenden Wicklungsträgern 17, welche die Wicklungskerne 5 der Polstruktur 3 umhüllen. Die (radial inneren) Fortsätze 6 der Polstücke 2 sind dabei, ebenso wie die Verbindungsstege 7, im Bereich der Hülse 15 vollständig in die Kunststoffstruktur 13 eingebettet. Der Innendurchmesser d der Hülse 15 ist dabei etwas geringer als der Durchmesser D des zentralen Durchbruchs 18 der Polstruktur, so dass die Hülse 15 eine vollständig geschlossene zylindrische innere Umfangsfläche 19 aufweist. An der Stirnseite 20 weist die Hülse 15 eine der Aufnahme eines O-Rings dienende Ringnut 21 auf, so dass ein fluiddichter Anschluss der Kunststoffstruktur 13 an ein benachbartes Bauteil möglich ist.

Radial außen gehen die Wicklungsträger 17 in an sie einstückig angeformte Abschlussplatten 22 über. Diese erstrecken sich in axialer sowie in Umfangsrichtung über den jeweils zugeordneten Wicklungsträger 17 hinaus und begrenzen radial nach außen hin den für die Aufnahme der jeweiligen Statorwicklung 10 zur Verfügung stehenden Raum. In Umfangsrichtung erstrecken sich die Abschlussplatten 22 dabei im selben Maß wie die T-förmigen Köpfe 8 der Polstücke 4, so dass die Enden der letzteren freiliegen. Radial außen liegen die T-förmigen Köpfe 8 der Polstücke ohnehin vollständig frei, um einen - im Hinblick auf den magnetischen Fluss - optimalen Kontakt zu dem später aufgepressten, aus einem Ring-Lamellenstapel aufgebauten Neutral-Ring 12 zu ermöglichen.

Das Abschlussstück 16 der Büchse 14 der Kunststoffstruktur 13 ist innen gestuft ausgeführt. Hier ist ein Sitz 23 für die Aufnahme eines Wälzlagers ausgebildet, welches der Lagerung der Rotorwelle dient. Da es auf Details hiervon vorliegend nicht ankommt, sind der Rotor R, dessen Rotorwelle W und das in dem Sitz 23 aufgenommene Lager L in Fig. 4 nur schematisch angedeutet. Außen weist die Kunststoffstruktur 13 verschiedene Funktionselemente auf. So sind an dem Abschlussstück 16 verschiedene Stützvorsprünge mit jeweils einer Auflagefläche 24 für eine Leiterplatte 25 mit einer elektronischen Motorsteuerung (vgl. Fig. 6) angeformt. Ein zentraler Stützvorsprung 26 ist dabei als eine im Bereich der Achse A angeordnete zapfenartige Erhebung ausgeführt. Und drei periphäre Stützvorsprünge 27 sind jeweils endseitig an einem zugeordneten Arm 28 angeordnet. Zwei von ihnen verfügen über Zentrierzapfen 29, welche mit korrespondierenden Zentrierbohrungen 30 in der Leiterplatte 25 zusammenwirken, um deren Lage zu sichern. Im Bereich des dritten periphären Stützvorsprungs 27 ist demgegenüber ein Durchbruch 31 für die Durchführung des mit dem Neutral-Ring 12 verbundenen Neutral-Kontakts 32 vorgesehen. Auf diese Weise bildet der dritte periphäre Stützvorsprung 27 zugleich ein Stützelement 33 für den Neutral-Kontakt 32 aus.

An jedem der drei Arme 28, die im Übrigen um jeweils 120° zueinander versetzt sind und jeweils zu einem Zwischenraum zwischen zwei Wicklungsträgern 17 fluchten, ist eine Aufnahme 34 für ein metallisches elektrisches Kontaktstück 35 ausgebildet. Die drei Kontaktstücke 35 sind U-förmig gestaltet, wobei die Öffnung 36 jeweils zur Leiterplatte 25 weist. Zu dem durch die beiden Schenkel 37 des jeweiligen Kontaktstücks 35 begrenzten Raum fluchtend weist der zugeordnete Arm 28 zwei Kerben 38 auf, so dass jeweils zwischen den beiden benachbarten Statorwicklungen 10 der Wicklungsdraht 39 durch die beiden Kerben 38 hindurch in das U-förmige Kontaktstück 35 eingelegt werden kann. Jeweils läuft einer der beiden Schenkel 37 jedes Kontaktstücks 35 in einem Kontaktstift 40 aus. Dieser greift in eine korrespondierende Kontaktbohrung 41 auf der Leiterplatte 25 ein. Entsprechendes gilt für den am Ende des Neutral-Kontakts 32 vorgesehenen Kontaktstift 42.

Jeweils zwischen zwei Armen 28 sind an das Abschlussstück 16 drei Leitstege 43 angeformt. Diese weisen jeweils eine darin ausgeführte Kerbe 44 auf. Die Kerben 44 dienen jeweils der Aufnahme zweier Verbindungsabschnitte 45 des Wicklungsdrahts 39 jeweils zwischen zwei einander gegenüberliegenden phasengleichen Statorwicklungen 10. Diese werden, wie insbesondere aus den Figuren 5 und 6 ersichtlich, jeweils auf einen Wicklungsträger 17 gewickelt, und zwar in dem radial innen durch die Außenfläche der Hülse 15 und radial außen durch die Innenseite der Abschlussplatte 22 begrenzten Raum. So ist ersichtlich ein direkter Kontakt des Wicklungsdrahts 39 mit der Polstruktur 3 zuverlässig ausgeschlossen.

Nach dem Anbringen der Leiterplatte 25 und deren elektrischer Kontaktierung mit den drei Kontaktstücken 35 und dem Neutral-Kontakt 32 (Fig. 7) wird die entsprechende Baugruppe in einer Spritzgießform mit dem gleichen Epoxy-Thermoset, aus dem auch die Kunststoffstruktur 13 besteht, umspritzt. Es entsteht hierdurch ein aus Kunststoff spritzgeformter, an die bis dahin gefertigte Einheit aus Polstruktur 3, daran spritzgeformter Kunststoffstruktur 13, in diese eingesetzten Kontaktstücken 35 und auf diese aufgebrachten Statorwicklungen 10, aufgesetztem Neutral-Ring 12 samt Neutral-Kontakt 32 und elektrisch angeschlossener Leiterplatte 25 angespritzter Außenkorpus 46, in den die besagten Bauteile (Kunststoffstruktur 13 samt Statorwicklungen 10 sowie der Neutral-Ring 12 und die Leiterplatte 25) vollständig eingebettet sind. An dem Außenkorpus 46 sind drei Befestigungslaschen 47 angeformt. Die von Anfang an an der Leiterplatte 25 vorgesehene Anschlussbuchse 48 ragt aus dem Außenkorpus 46, in dem sie mechanisch fest verankert ist, heraus.

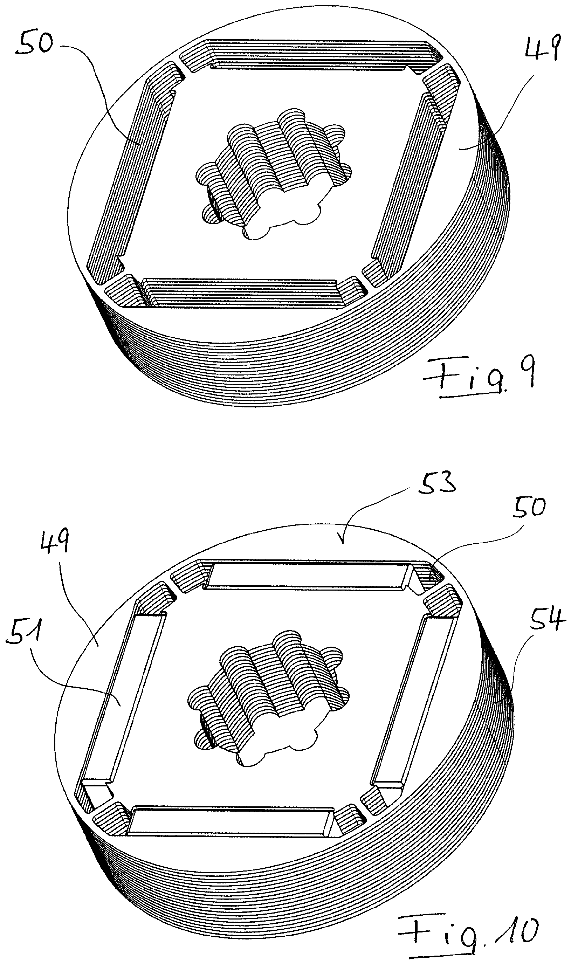

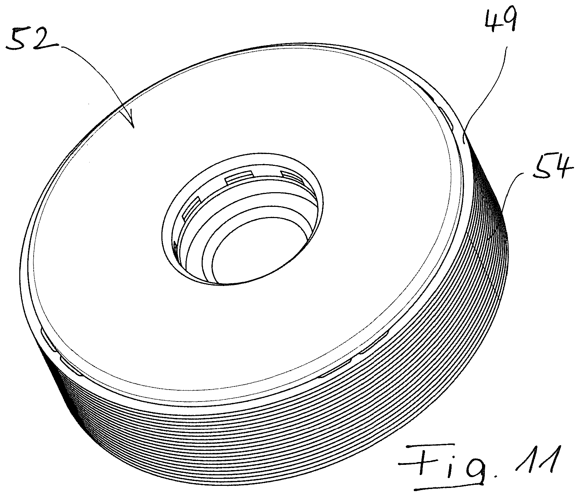

Der - innerhalb der Hülse 15 angeordnete und um die Achse A drehbar gelagerte - Innenrotor des den Außenstator 1 nach den Figuren 1-8 aufweisenden Elektromotors ist hinsichtlich besonderer Gestaltungsmerkmale in den Figuren 9-11 veranschaulicht. Er umfasst eine aus einem Lamellenstapel aus ferromagnetischem Material bestehende, mit einer - nicht gezeigten - Rotorwelle zu verbindende Kernstruktur 49. Diese weist vier Durchbrüche 50 auf, in welche - in Quadratanordnung - vier aus NdFeB gesinterte Permanentmagnete 51 eingesetzt sind. Die Kernstruktur 49 ist dergestalt mit einem Kunststoffmantel 52 umgossen, dass die beiden Stirnflächen 53 weitestgehend bedeckt und auch die verbleibenden Hohlräume der Durchbrüche 50 mit Kunststoff gefüllt sind. Der äußere Umfang 54 der Kernstruktur 49 bleibt indessen frei.

## Patentansprüche

1. Elektromotor, insbesondere für ein Fluidaggregat, mit einem Außenstator (1) und einem um eine Achse (A) drehbar gelagerten Innenrotor, mit den folgenden Merkmalen:
- Der Außenstator (1) umfasst
- eine Mehrzahl von um die Achse (A) herum angeordneten ferromagnetischen Polstücken (4) mit sich im Wesentlichen radial erstreckenden Wicklungskernen (5),
- eine spritzgeformte Kunststoffstruktur (13) mit die Wicklungskerne (5) umhüllenden Wicklungsträgern (17) und einer Hülse (15), welche eine sich radial innerhalb der Polstücke (4) erstreckende, geschlossene Innenfläche (19) aufweist, und
- auf den Wicklungsträgern (17) aufgenommene Statorwicklungen (10);
- Der Rotor (R) ist innerhalb der Hülse (15) angeordnet;
- Die Kunststoffstruktur (13) umfasst eine Büchse (14), welche ihrerseits die Hülse (15) sowie ein diese endseitig verschließendes Abschlussstück (16) umfasst, wobei der Rotor (R) in einem in dem Abschlussstück (16) angeordneten Lager (L) gelagert ist;
- Der Stator (1) weist einen in situ aus Kunststoff spritzgeformten, an die Kunststoffstruktur (13) angespritzten Außenkorpus (46) auf, in den die Kunststoffstruktur (13) samt Statorwicklungen (10) eingebettet ist.

2. Elektromotor nach Anspruch 1, **dadurch gekennzeichnet, dass** die Kunststoffstruktur (13) aus Epoxy-Thermoset besteht.

3. Elektromotor nach Anspruch 1 oder Anspruch 2, **dadurch gekennzeichnet, dass** an dem Abschlussstück (16) mindestens zwei Stützvorsprünge (27) angeordnet sind, an denen eine in den Außenkorpus (46) eingebettete Leiterplatte (25) mit einer elektronischen Motorsteuerung fixiert ist.

4. Elektromotor nach einem der Ansprüche 1 bis 3, **dadurch gekennzeichnet, dass** an dem Abschlussstück (16) Aufnahmen (34) für elektrische Kontaktstücke (35) angeformt sind.

5. Elektromotor nach Anspruch 4, **dadurch gekennzeichnet, dass** die Aufnahmen (34) jeweils zu einem Zwischenraum zwischen zwei Polstücken (4) fluchten.

6. Elektromotor nach Anspruch 4 oder Anspruch 5, **dadurch gekennzeichnet, dass** die Kontaktstücke (35) U-förmig gestaltet sind mit einem in einem Kontaktstift (40) auslaufenden Schenkel (37).

7. Elektromotor nach einem der Ansprüche 1 bis 6, **dadurch gekennzeichnet, dass** die Polstücke (4) radial außen von einem sie kontaktierenden, in den Außenkorpus (46) eingebetteten Neutral-Ring (12) umgeben sind.

8. Elektromotor nach Anspruch 7, **dadurch gekennzeichnet, dass** mit dem Neutral-Ring (12) ein Neutral-Kontakt (32) verbunden ist, der in einem Stützelement (31) des Abschlussstücks (16) aufgenommen ist.

9. Elektromotor nach einem der Ansprüche 1 bis 8, **dadurch gekennzeichnet, dass** die Polstücke (4) radial außen T-förmig ausgeführt sind.

10. Elektromotor nach einem der Ansprüche 1 bis 9, **dadurch gekennzeichnet, dass** die Wicklungsträger (17) radial außen in angeformte Abschlussplatten (22) übergehen.

11. Elektromotor nach einem der Ansprüche 1 bis 10, **dadurch gekennzeichnet, dass** in die Büchse (14) eine Einsatzbüchse, bevorzugt aus Edelstahl, eingebettet ist.

12. Elektromotor nach einem der Ansprüche 1 bis 11, **dadurch gekennzeichnet, dass** die Hülse (15) gegenüber dem Abschlussstück (16) eine Dichtstruktur für einen dichten Anschluss an ein Aggregatgehäuse aufweist.

13. Elektromotor nach einem der Ansprüche 1 bis 12, **dadurch gekennzeichnet, dass** die Polstücke (4) Teil einer zusammenhängenden Polstruktur (3) sind, indem sie radial innen im Bereich von Fortsätzen (6) untereinander über Verbindungsstege (7) verbunden sind.

14. Elektromotor nach Anspruch 13, **dadurch gekennzeichnet, dass** die Polstruktur (3) aus einem Lamellenstapel besteht.

15. Elektromotor nach Anspruch 14, **dadurch gekennzeichnet, dass** nur ein Teil der Lamellen Verbindungsstege (7) aufweist und ringförmig zusammenhängend ist.

16. Elektromotor nach einem der Ansprüche 1 bis 15, **dadurch gekennzeichnet, dass** der Außenkorpus (46) und die Kunststoffstruktur (13) aus übereinstimmendem Material bestehen.

17. Elektromotor nach einem der Ansprüche 1 bis 16, **dadurch gekennzeichnet, dass** der Rotor eine aus einem Lamellenstapel bestehende Kernstruktur (49) aufweist.

18. Elektromotor nach Anspruch 17, **dadurch gekennzeichnet, dass** in die Kernstruktur (49) gesinterte Permanentmagnete (51) eingesetzt sind.

19. Elektromotor nach Anspruch 17 oder Anspruch 18, **dadurch gekennzeichnet, dass** die Kernstruktur (49) zumindest teilweise mit einem Kunststoffmantel (52) umgossen ist.

## Claims

1. An electric motor, especially for a fluid-handling system, having an external stator (1) and an internal rotor mounted to rotate around an axis (A), comprising the following features:
- the external stator (1) comprises
- a multiplicity of ferromagnetic pole pieces (4) disposed around the axis (A) and having winding cores (5) extending substantially radially
- an injection-molded plastic structure (13) having winding supports (17) enveloping the winding cores (5) and a bushing (15), which is provided with a closed inside face (19) extending radially inside the pole pieces (4), and
- stator windings (10) received on the winding supports (17);
- the rotor (R) is disposed inside the sleeve (15),
- the plastic structure (13) comprises a bushing (14), which in turn comprises the sleeve (15) as well as an end piece (16) closing this in the end region, wherein the rotor (R) is mounted in a bearing (L) disposed in the end piece (16)
- the stator (1) is provided with an external body (46) injection-molded from plastic, which is injection-molded in situ onto the plastic structure (13), and in which the plastic structure (13) plus stator windings (10) is embedded.

2. The electric motor of claim 1, **characterized in that** the plastic structure (13) consists of thermosetting epoxy.

3. The electric motor of claim 1 or claim 2, **characterized in that** at least two bracing projections (27) are disposed on the end piece (16), on which a printed-circuit board (25) embedded in the external body (46) having an electronic motor controller is fixed.

4. The electric motor of one of claims 1 to 3, **characterized in that** receptacles (34) for electrical contact points (35) are molded onto the end piece (16).

5. The electric motor of claim 4, **characterized in that** the receptacles (34) are respectively aligned with an intermediate space between two pole pieces (4).

6. The electric motor of claim 4 or claim 5, **characterized in that** the contact points (35) are configured in U-shape with one limb (37) tapering to a contact pin (40).

7. The electric motor of one of claims 1 to 6, **characterized in that** the pole pieces (4) are surrounded in the radially outer region by a neutral ring (12) contacting them and embedded in the external body (46).

8. The electric motor of claim 7, **characterized in that** a neutral contact (32), which is received in a bracing element (31) of the end piece (16), is connected to the neutral ring (12).

9. The electric motor of one of claims 1 to 8, **characterized in that** the pole pieces (4) are T-shaped in the radially outer region.

10. The electric motor of one of claims 1 to 9, **characterized in that** the winding supports (17) merge in the radially outer region into molded-on end plates (22).

11. The electric motor of one of claims 1 to 10, **characterized in that** an insertion bushing, preferably of stainless steel, is embedded in the bushing (14).

12. The electric motor of one of claims 1 to 11, **characterized in that** the sleeve (15) is provided opposite the end piece (16) with a sealing structure for sealed attachment on a system housing.

13. The electric motor of claims 1 to 12, **characterized in that** the pole pieces (4) are part of a continuous pole structure (3), **in that** they are joined to one another in the radially inner region, in the region of the prolongations (6), via connecting webs (7).

14. The electric motor of claim 13, **characterized in that** the pole structure (3) consists of a stack of laminations.

15. The electric motor of claim 14, **characterized in that** only some of the laminations have connecting webs (7) and are annularly continuous.

16. The electric motor of one of claims 1 to 15, **characterized in that** the external body (46) and the plastic structure (13) consist of the same material.

17. The electric motor of one of claims 1 to 16, **characterized in that** the rotor is provided with a core structure (49) consisting of a stack of laminations.

18. The electric motor of claim 17, **characterized in that** sintered permanent magnets (51) are inserted into the core structure (49) .

19. The electric motor of claim 17 or claim 18, **characterized in that** the core structure (49) is overmolded at least partly with a plastic jacket (52).

## Revendications

1. Moteur électrique, destiné notamment à un groupe fluidique, pourvu d'un stator extérieur (1) et d'un rotor intérieur logé en rotation autour d'un axe (A), présentant les caractéristiques suivantes :
- Le stator extérieur (1) comprend
- une multiplicité de pièces polaires (4) ferromagnétiques, placées autour de l'axe (A), pourvues de noyaux d'enroulement (5) s'étendant sensiblement en direction radiale,
- une structure en matière plastique (13) moulée par injection, pourvue de supports d'enroulement (17) enveloppant les noyaux d'enroulement (5) et une douille (15), laquelle présente une surface intérieure (19) fermée, s'étendant en direction radiale à l'intérieur des pièces polaires (4) et des enroulements de stator (10) réceptionnés sur les supports d'enroulement (17) ;
- Le rotor (R) est placé à l'intérieur de la douille (15) ;
- La structure en matière plastique (13) comprend une boîte (14), laquelle quant à elle comprend la douille (15), ainsi qu'une pièce de terminaison (16) fermant celle-ci sur côté d'extrémité, le rotor (R) étant logé dans un palier (L) placé dans la pièce de terminaison (16) ;
- Le stator (1) comporte un corps extérieur (46), moulé in situ par injection de matière plastique sur la structure en matière plastique (13), dans lequel est incorporée la structure en matière plastique (13) avec les enroulements de stator (10) .

2. Moteur électrique selon la revendication 1, **caractérisé en ce que** la structure en matière plastique (13) est constituée d'un époxy thermodurcissable.

3. Moteur électrique selon la revendication 1 ou la revendication 2, **caractérisé en ce que** sur la pièce de terminaison (16) sont placées au moins deux saillies d'appui (27), sur lesquelles est fixée une carte de circuits imprimés (25) incorporée dans le corps extérieur (46), avec une commande de moteur électronique.

4. Moteur électrique selon l'une quelconque des revendications 1 à 3, **caractérisé en ce que** sur la pièce de terminaison (16) sont surmoulés des logements (34) pour des pièces de contact (35) électriques.

5. Moteur électrique selon la revendication 4, **caractérisé en ce que** les logements (34) s'alignent respectivement vers un espace intermédiaire entre deux pièces polaires (4) .

6. Moteur électrique selon la revendication 4 ou la revendication 5, **caractérisé en ce que** les pièces de contact (35) sont conçues en forme de U, avec une branche (37) se terminant dans une broche de contact (40) .

7. Moteur électrique selon l'une quelconque des revendications 1 à 6, **caractérisé en ce que** les pièces polaires (4) sont entourées en direction radiale sur l'extérieur par une bague neutre (12) qui les contacte, incorporée dans le corps extérieur (46).

8. Moteur électrique selon la revendication 7, **caractérisé en ce qu'**avec la bague neutre (12) est relié un contact neutre (32), qui est logé dans un élément d'appui (31) de la pièce de terminaison (16).

9. Moteur électrique selon l'une quelconque des revendications 1 à 8, **caractérisé en ce que** les pièces polaires (4) sont réalisées à l'extérieur en forme de T.

10. Moteur électrique selon l'une quelconque des revendications 1 à 9, **caractérisé en ce que** les supports d'enroulement (17) passent à l'extérieur en direction radiale dans des plaques de terminaison (22) surmoulées.

11. Moteur électrique selon l'une quelconque des revendications 1 à 10, **caractérisé en ce que** dans la boîte (14) est incorporée une boîte d'insertion, de préférence en acier inoxydable.

12. Moteur électrique selon l'une quelconque des revendications 1 à 11, **caractérisé en ce que** la douille (15) comporte par rapport à la pièce de terminaison (16) une structure d'étanchéité pour un raccordement étanche à sur un carter du groupe.

13. Moteur électrique selon l'une quelconque des revendications 1 à 12, **caractérisé en ce que** les pièces polaires (4) sont une partie intégrante d'une structure polaire (3) cohérente, **en ce que** dans la direction radiale à l'intérieur, dans la zone de prolongements (6), elles sont reliées entre elles par l'intermédiaire de barrettes de liaison (7).

14. Moteur électrique selon la revendication 13, **caractérisé en ce que** la structure polaire (3) est constituée d'une pile de lamelles.

15. Moteur électrique selon la revendication 14, **caractérisé en ce que** seule une partie des lamelles comporte des barrettes de liaison (7) et est cohérente de forme annulaire.

16. Moteur électrique selon l'une quelconque des revendications 1 à 15, **caractérisé en ce que** le corps extérieur (46) et la structure en matière plastique (13) sont constitués de matières coïncidentes.

17. Moteur électrique selon l'une quelconque des revendications 1 à 16, **caractérisé en ce que** le rotor comporte une structure de cœur constituée d'une pile de lamelles (49).

18. Moteur électrique selon la revendication 17, **caractérisé en ce que** dans la structure de cœur (49) sont insérés des aimants permanents (51) frittés.

19. Moteur électrique selon la revendication 17 ou la revendication 18, **caractérisé en ce que** la structure de cœur (49) est enrobée par coulée au moins partiellement d'une enveloppe de matière plastique (52).
